# EUROPEAN PATENT SPECIFICATION

(11) **EP 4 480 827 B1**
(45) Date of publication and mention of the grant of the patent: **09.09.2026**
(21) Application number: 24178688.8
(22) Date of filing: 29.05.2024
(51) Int. Cl.: B64D 27/40

(54) **AIRCRAFT PROPULSION ASSEMBLY HAVING A JET ENGINE, A PYLON AND AN EXTINGUISHING SYSTEM**
FLUGZEUGANTRIEBSANORDNUNG MIT STRAHLTRIEBWERK, PYLON UND LÖSCHSYSTEM
ENSEMBLE PROPULSIF D'AÉRONEF COMPRENANT UN TURBORÉACTEUR, UN MÂT ET UN SYSTÈME D'EXTINCTION

(30) Priority: 14.06.2023 US 202363508108 P; 14.06.2023 US 202363508102 P; 14.06.2023 US 202363508104 P; 14.06.2023 US 202363508106 P; 14.06.2023 US 202363508107 P
(43) Date of publication of application: 25.12.2024
(73) Proprietor: Airbus Operations (S.A.S.), 31060 Toulouse Cedex 9 (FR)
(72) Inventor: DEFORET, Thomas, 31060 Toulouse (FR); MAHE, Mathieu, 31060 Toulouse (FR); KALETA, Mathieu, 31300 Toulouse (FR); RENAUD, Eric, 31300 Toulouse (FR)
(74) Representative: Cabinet Le Guen Maillet

(56) References cited:
- EP-A1- 4 292 673
- US-A- 2 952 125
- US-A1- 2016 368 618
- US-A1- 2017 096 238
- US-A1- 2022 024 599

## Description

### TECHNICAL FIELD

The present invention relates to the general field of aircraft propulsion assembly. It particularly relates to the extinguishing system which is implemented in the propulsion assembly. It also relates to an aircraft equipped with such a propulsion assembly.

### PRIOR ART

A propulsion assembly of the prior art is fastened beneath a wing of an aircraft that has a jet engine and an attachment pylon via which the jet engine is fastened beneath the wing.

Due to the design of attachment pylon of the prior art, standard extinguishing systems are installed at the rear of the attachment pylon above the aerodynamic fairing of the attachment and below the wing. They are usually attached to the rigid structure of the pylon or to the wing intrados. As the extinguishing agent of the extinguishing system needs to be ducted towards nozzles located inside the fire area, a common solution is to implement a pipe routing along the pylon from the extinguishing bottle location towards the nozzles. However, the extinguishing bottles are installed at the rear of the rigid structure whereas the nozzles are positioned at the front of the rigid structure, closer to the jet engine.

The length of the piping is therefore quite significant. As a result, a large amount of extinguishing agent in the extinguishing bottle is needed to ensure the system operation. The volume of the bottle is therefore significant, as the weight of the system.

There is therefore a need to provide an extinguishing system that at least partially overcomes the aforementioned drawbacks.

The following documents disclose propulsion assemblies of the prior art: US 2017/096238 A1 discloses a propulsion system comprising a nacelle substantially tubular around a longitudinal axis, having an inner wall extending from a front to a rear of the nacelle and by an outer wall, external of the inner wall, extending from the front to the rear of the nacelle, a turbojet comprising a fan and situated internally of the inner wall of the nacelle, at least one tank containing an extinguishing fluid, and a network of pipes hydraulically connected to the tank. The propulsion system comprises each tank being located in the nacelle, around the inner wall and internally of the outer wall. US 2022/024599 A1 discloses a propulsive assembly for aircraft comprising an engine, a nacelle arranged around the engine and a pylon supporting the engine, the nacelle including two engine cowls and reversing cowls, each cowl having an internal skin. At least one of the cowls of the nacelle comprises at least one box arranged in a space situated between the internal skin of the cowl and the engine, the box delimiting a volume of inert material, the inert material being flame retardant foam. This box partially blocks a zone of the engine where a fire is likely to begin, which makes it possible to limit the volume of a fire zone of the engine, and thus reduce the quantity of extinguishing agent which is necessary to extinguish a fire in the zone of the engine concerned. US 2016/368618 A1 discloses an aircraft propulsion assembly including an engine, a nacelle surrounding the engine, and a system for extinguishing a fire that may occur in the engine and/or in the nacelle. The extinguishing system has means for supplying an extinguishant to at least one extinguishant distribution pipe which opens into a cavity of the engine and/or a cavity of the nacelle. The extinguishing system also includes means for supplying said at least one pipe with air so as to ventilate the or each cavity.

### SUMMARY OF THE INVENTION

An object of the present invention is to propose a propulsion assembly for an aircraft, said propulsion assembly having:
- a jet engine comprising a fan casing and a central casing both extending around a longitudinal axis,
- an attachment pylon having a rigid structure, said rigid structure taking the form of a box that has a front wall and an upper spar extending forwardly with respect to the front wall; and
- an extinguishing system.

In particular, said extinguishing system is located in a front position relative to said rigid structure, the extinguishing system being positioned between said upper spar, said front wall and said fan casing.

Moreover, said extinguishing system comprises:
- at least one extinguishing bottle containing an extinguishing agent,
- at least one nozzle positioned in a critical fire area of said propulsion assembly, and
- pipes, each pipe having a first end connected to the at least one extinguishing bottle and a second end connected to said at least one nozzle for delivering the extinguishing agent.

According to the invention, said extinguishing system comprises a supporting device having at least one support ring on which the at least one extinguishing bottle is held and removably fixed, each support ring being fixed to a base, the base being fixed to the upper spar or to the front wall.

With such an arrangement, the length of the piping from the extinguishing bottle towards the nozzle (as described below) can be reduced. Having shorter piping may enable to reduce the extinguishing agent volume needed and consequently to decrease the size and the weight of the extinguishing bottles. In addition, having the extinguishing system in this area allows to have a cold air ventilation of the extinguishing bottles thanks to an air intake from the fan. Advantageously, said supporting device comprises a side panel extending globally perpendicularly to the base, the side panel being fixed to the upper spar or to the front wall. Advantageously, each support ring comprises a cutout allowing said extinguishing bottle to be installed and removed from the support ring.

Advantageously, each support ring comprises locking means for removably fixing one of said at least one extinguishing bottle on said support ring, said locking means being arranged to allow locking and unlocking of said extinguishing bottle on said support ring.

The invention also proposes an aircraft having a propulsion assembly according to the preceding variants.

### BRIEF DESCRIPTION OF THE DRAWINGS

The abovementioned features of the invention, along with others, will become more clearly apparent upon reading the following description of one exemplary embodiment, said description being given with reference to the appended drawings, in which:
Fig. 1 is a side view of an aircraft according to the invention,
Fig. 2 is a schematic view of a propulsion assembly according to the invention,
Fig. 3 is a perspective view of an example of a front engine attachment used in the propulsion assembly according to the invention,
Fig. 4 is a perspective view of an example of a complementary front engine attachment used in the propulsion assembly according to the invention,
Fig. 5 is a detailed view of figure 2, and
Fig. 6 is a perspective view of an extinguishing system configured to be implemented in the propulsion assembly of the invention.

### DETAILED DESCRIPTION OF EMBODIMENTS

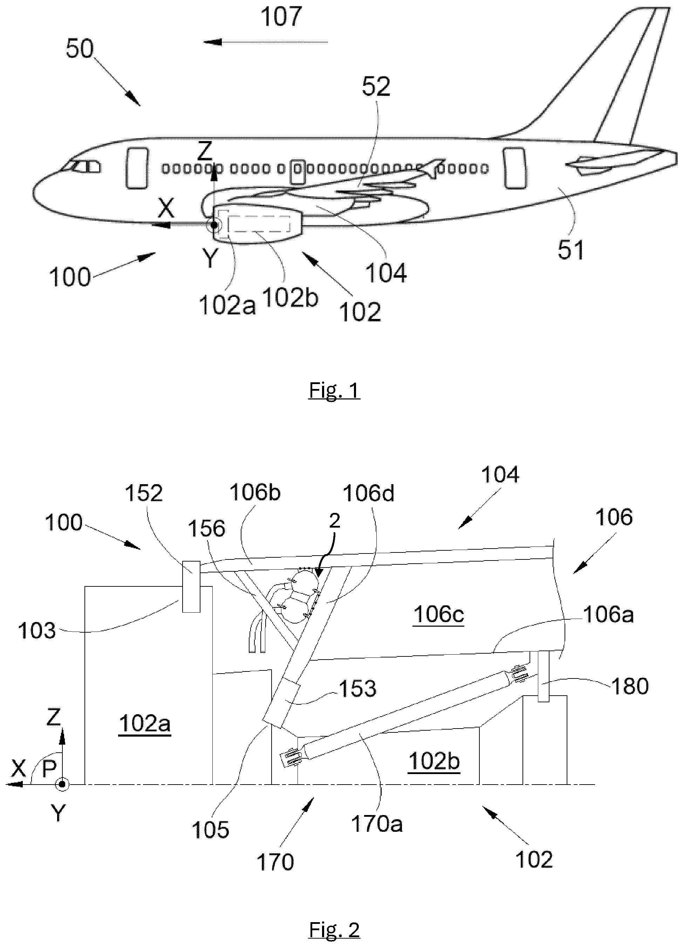

Fig. 1 shows an aircraft 50 that has a fuselage 51 and a wing 52 on each side of the fuselage 51. At least one propulsion assembly 100 is fastened beneath each wing 52 and it comprises a jet engine 102 and an attachment pylon 104.

By convention, X denotes the longitudinal axis of the propulsion assembly 100 corresponding to a longitudinal axis X of the jet engine 102. Moreover, Y denotes the transverse axis of the propulsion assembly 100 corresponding to a transverse axis of the jet engine 102, this axis being horizontal when the aircraft is on the ground, and Z denotes the vertical axis or vertical height of the propulsion assembly 100 corresponding to a vertical axis of the jet engine 102, this axis being vertical when the aircraft is on the ground, these three axis X, Y and Z being mutually orthogonal.

Moreover, the terms "front" and "rear" are to be considered relative to a direction of forward movement of the aircraft when the jet engine 102 is in operation, this direction being schematically shown by the arrow 107. The jet engine 102 has also a vertical median plane P (XZ) passing through the longitudinal axis X and the vertical axis Z.

The jet engine 102 has at the front, a fan casing 102a surrounding an annular fan duct in which a fan rotates and at the rear of the fan casing 102a, a central casing 102b of smaller size, enclosing the core of the jet engine 102. The fan casing 102a and the central casing 102b are around the longitudinal axis X.

The propulsion assembly 100 has also a nacelle 102a inside which the jet engine 102 is installed.

Fig. 2 shows the propulsion assembly 100 with the jet engine 102 and the attachment pylon 104 via which the jet engine 102 is fastened to the wing 52. The attachment pylon 104 is shown here by its rigid structure 106, which is also called the primary structure, and which is fastened beneath the wing 52.

The rigid structure 106 extends along the longitudinal axis X between a front end and a rear end and takes the form of a box that has a lower spar 106a, an upper spar 106b, two lateral walls 106c and a frontal wall 106d which are fixed together to realize the rigid structure 106. The front wall 106d is oriented towards the front of the aircraft 50. A lateral wall 106c is arranged on each side of the vertical median plane P. The upper spar 106b is above the lateral walls 106c and the lower spar 106a is beneath the lateral walls 106c.

The upper spar 106b extends forwardly in respect to the front wall 106d, it means that the upper spar 106b has a front end that is far from the front wall 106d in the forward direction F. In the present embodiment, the propulsion assembly 100 comprises a reaction device 170 for reacting the thrust forces generated by the jet engine 102. Here the reaction device 170 comprises two reaction rods 170a disposed on either side of the median plane P and articulated, on the one hand, at the front, on the central casing 102b, and, on the other hand, at the rear, on the rigid structure 106 for example on the lower spar 106a thanks to appropriate fittings that are not described in details because they are not a part of the invention and a man skilled in the art would be able to implement the fittings known from the prior art.

In the present embodiment, the propulsion assembly 100 comprises also a rear attachment 180 between the rigid structure 106, in this case the lower spar 106a, and a rear upper part of the central casing 102b. The rear attachment 180 is not described in detail because it is not a part of the invention and a man skilled in the art would be able to implement it from the prior art. The propulsion assembly 100 also comprises a front engine attachment 152 which is fixed between an upper area 103 of the fan casing 102a and the front end of the upper spar 106b. At the same time, the propulsion assembly 100 comprises a complementary front engine attachment 153 fixed between an upper area 105 of the central casing 102b and a lower end of the front wall 106d. With such arrangement, the sizes of the attachments are reduced and allows an aerodynamic optimization by reducing the size of the fairing of the nacelle.

It is understood that several solutions can be implemented to obtain the front engine attachment 152 and the complementary front engine attachment 153. Nevertheless, examples of each of these attachments are described below.

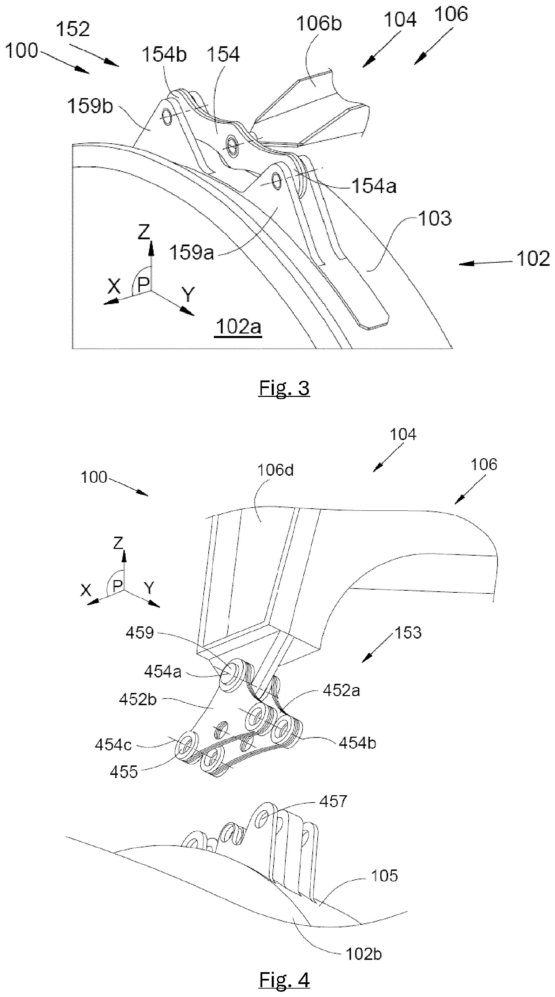

Fig. 3 shows an example embodiment of the front engine attachment 152. In this example, the front engine attachment 152 comprises a lever 154 which is mounted articulated on the front end of the upper spar 106b at the vertical median plane P. To this end, the front end of the upper spar 106b comprises for example a front cylinder, the axis of which is in the vertical median plane P and parallel to the longitudinal axis X and the lever 154 comprises a front hole in which the front cylinder is inserted in an articulated manner.

On each side of the vertical median plane P, the lever 154 comprises an end 154a-b which is mounted articulated on the upper area 103 of the fan casing 102a. These two ends 154a-b are symmetrical in respect to the vertical median plane P.

To this end, for each end 154a-b of the lever 154, a female clevis 159a-b is fixed to the upper area 103 of the fan casing 102a and said end 154a-b of the lever 154 is a male clevis mounted articulated in said female clevis 159a-b and maintained by an articulation axis inserted in an articulation hole of the end 154a-b. Articulation holes of the female clevis 159a-b and articulation axis are parallel to the longitudinal axis X.

Fig. 4 shows an example embodiment of the complementary front engine attachment 153. In this example, the complementary front engine attachment 153 comprises two fitting assemblies 452a-b, each one comprising, at the vertical median plane P, a first articulation point 454a to realize an articulation with the lower end of the front wall 106d, and on each side of the vertical median plane P, a second articulation point 454b-c to realize an articulation with the upper area 105 of the central casing 102b.

Each fitting assembly 452a-b is globally in a plane perpendicular to the longitudinal axis X and each articulation point 454a-c takes the form of a pivot link, the axis of rotation of which is globally parallel to the longitudinal axis X. Each articulation 454a-c of one fitting assembly 452a-b is coaxial with one articulation 454a-c of the other fitting assembly 452a-b.

To this end, each articulation 454a-c is realized by the combination of a first articulation hole 455 passing through the corresponding fitting assembly 452a-b and a second articulation hole 457 passing through the lower end of the front wall 106d or the upper area 105 of the central casing 102b.

In position, a first articulation hole 455 of one fitting assembly 452a-b is aligned with a first articulation hole 455 of the other fitting assembly 452b-a and a second articulation hole 457 of the lower end of the front wall 106d or of the upper area 105 of the central casing 102b. The propulsion assembly 100 comprises also for each second articulation hole 457, an articulation axis 459 which is inserted in said second articulation hole 457 and in the corresponding first articulation holes 455 of the two fitting assemblies 452a-b. The axis of each articulation axis 459 is globally parallel to the longitudinal axis X.

In this example, each fitting assembly 452a-b takes the form of a triangle, and a fitting assembly 452a-b is arranged on each side of the lower end of the front wall 106d.

According to a specific arrangement, the front engine attachment 152 reacts to the lateral loads only (parallel to the lateral axis Y) and the complementary front engine attachment 153 reacts to the lateral loads (parallel to the lateral axis Y) and to vertical loads (parallel to the vertical axis Z).

**In** addition, the axial moment Mx is sustained by the front engine attachment 152 and the complementary front engine attachment 153 thanks to the lateral loads acting on the fan casing 102a and the lateral loads acting on the central casing 102b. The load transfer from the jet engine 102 to the attachment pylon 104 through this engine mount concept is isostatic. Preferably, in order to reinforce the upper spar 106b, the propulsion assembly 100 comprises a main rod 156 fixed between the upper spar 106b and the front wall 106d. Each end of the main rod 156 is mounted in an articulated manner respectively to the upper spar 106b and to the front wall 106d.

Figs. 2, 5 and 6 show the propulsion assembly according to the invention. The propulsion assembly 100 further comprises an extinguishing system 2 which is located in a front position relative to said rigid structure 106. The front position is taken according to the horizontal axis X and the forward direction 107. More particularly, the extinguishing system 2 is positioned between the rigid structure 106 and the jet engine 102.

Preferably, and as described previously, the jet engine 102 comprises a fan casing 102a and a central casing 102b both extending around a longitudinal axis (X). The fan casing 102a and the central casing 102b have a vertical median plan P passing through the longitudinal axis X. Moreover, the rigid structure 106 takes the form of a box that has a front wall 106d and an upper spar 106b extending forwardly with respect to the front wall 106d. Thus, the extinguishing system 2 is positioned between the upper spar 106b, the front wall 106d and the fan casing 102a.

Thanks to this new positioning of the extinguishing system 2, the length of the piping from the extinguishing bottle 21 towards the nozzle 22 (as described below) can be reduced. Having shorter piping may enable to reduce the needed extinguishing agent volume and consequently to decrease the size and the weight of the extinguishing bottles 21.

**In** addition, having the extinguishing system 2 in this area allows to have a cold air ventilation of the extinguishing bottles 21 thanks to an air intake from the fan.

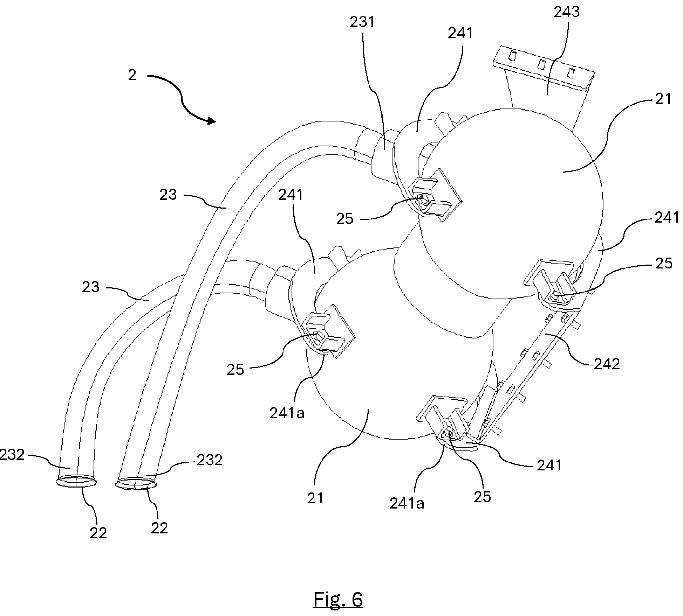

As discussed above and as illustrated on Fig. 6, the extinguishing system 2 comprises:
- at least one extinguishing bottle 21 containing an extinguishing agent,
- at least one nozzle 22 positioned in a critical fire area of said propulsion assembly 100, and
- pipes 23, each pipe 23 having a first end 231 connected to the at least one extinguishing bottle and a second end 232 connected to the at least one nozzle 22 for delivering the extinguishing agent.

Preferably, each pipe 23 is connected between an extinguishing bottle 21 and a set (not illustrated) of nozzles 22.

Thanks to the positioning of the extinguishing system, the length of the pipes 23 are thus optimized so the overall weight of the system can also be optimized.

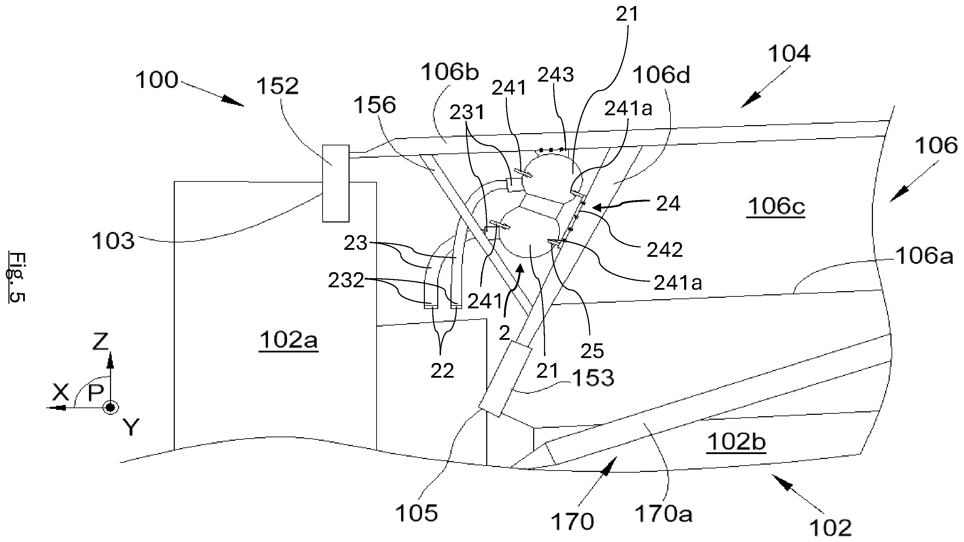

According to a particular embodiment, illustrated on Figs. 5 and 6, the extinguishing system 2 comprises a supporting device 24 having at least one support ring 241 on which the at least one extinguishing bottle 21 is held and removably fixed. Each support ring 241 is fixed to a base 242, which base 242 being fixed to the upper spar 106b or to the front wall 106d.

In this example, the extinguishing system 2 comprises two extinguishing bottles 21 but it is obvious that one bottle or more than two bottles 21 can be implemented without departing from the general principle of invention. It is understood that the number of support ring 241 would thus be adapted to the number of bottles 21.

Each extinguishing bottle 21 is held on a support ring 241. It means that the extinguishing bottle 21 is received in the support ring 241 or that the extinguishing bottle 21 is set on the support ring 241. In other words, each extinguishing bottle 21 is supported by a support ring 241.

As illustrated on Figs. 5 and 6, the base 242 is fixed to the front wall 106d of the rigid structure 106. Thus, the base 242 extends globally vertically, that means globally parallelly to the vertical axis Z. Consequently, the extinguishing bottles 21 are globally vertically aligned one above the others.

In a variant not illustrated, the base 242 is fixed to the upper spar 106b of the rigid structure 106. Thus, the base 242 extends globally horizontally, that means globally parallelly to the horizontal axis X. Consequently, the extinguishing bottles 21 are globally horizontally aligned one next to the others.

In such a manner, the extinguishing system 2 is positioned close to the critical fire area (that is to say close to the jet engine 102) and is reliably fixed to the rigid structure 106.

According to a particular embodiment, illustrated on Figs. 5 and 6, the supporting device 24 comprises a side panel 243 extending globally perpendicularly to the base 242. The side panel 243 is fixed to the upper spar 106b or to the front wall 106d. More particularly, when the base 242 is fixed to the front wall 106d, the side panel 243 is thus fixed to the upper spar 106b (as illustrated). When the base 242 is fixed to the upper spar 106b, the side panel 243 is thus fixed to the front wall 106d (not illustrated).

The side panel 243 acts as a reinforcement to ensure the reliable fixing of the extinguishing system 2 to the rigid structure 106.

Preferably, each support ring 241 comprises a cutout 241a allowing the extinguishing bottle 21 to be installed and removed from the support ring 241. More particularly, each support ring 241 surrounds at least a portion of the extinguishing bottle 21 held in the support ring 241. The cutout 241a allows the extinguishing bottle 21 to be installed and removed from the support ring 241 by a movement of the extinguishing bottle 21 relative to the supporting ring 241 parallel to a horizontal plan XY. **In** other words, the extinguishing bottle 21 can be installed and removed from the support ring by a side movement of the extinguishing bottle 21.

**In** particular, the extinguishing system 2 is designed and fixed to the rigid structure 106 in such a manner that the extinguishing bottles 21 can be installed and removed from the propulsion assembly 100 (e.g. for maintenance or filling operations) on a side of the propulsion assembly 100. Thus, the installation and the removal operations of the extinguishing bottles 21, and more globally of the extinguishing system 2 are facilitated. Preferably, each support ring 241 comprises locking means 25 for removably fixing one of said at least one extinguishing bottle 21 on the support ring 241. The locking means 25 are arranged to allow locking and unlocking of the extinguishing bottle 21on the support ring 241. Thus, each extinguishing bottle 21 is removably fixed to the support ring 241 thanks to removable locking means 25. The removable locking means 25 can, for example, take the form of a bolt or a quick-release fastener.

## Claims

1. Propulsion assembly (100) for an aircraft (50), said propulsion assembly (100) having:
- a jet engine (102) comprising a fan casing (102a) and a central casing (102b) both extending around a longitudinal axis (X),
- an attachment pylon (104) having a rigid structure (106), said rigid structure (106) taking the form of a box that has a front wall (106d) and an upper spar (106b) extending forwardly with respect to the front wall (106d), and
- an extinguishing system (2),
wherein said extinguishing system (2) is located in a front position relative to said rigid structure (106), the extinguishing system (2) being positioned between said upper spar (106b), said front wall (106d) and said fan casing (102a);
and wherein said extinguishing system (2) comprises:
- at least one extinguishing bottle (21) containing an extinguishing agent,
- at least one nozzle (22) positioned in a critical fire area of said propulsion assembly (100),
- pipes (23), each pipe (23) having a first end (231) connected to the at least one extinguishing bottle and a second end (232) connected to said at least one nozzle (22) for delivering the extinguishing agent; and
a supporting device (24) having at least one support ring (241) on which the at least one extinguishing bottle (21) is held and removably fixed, each support ring (241) being fixed to a base (242), the base (242) being fixed to the upper spar (106b) or to the front wall (106d).

2. Propulsion assembly (100) according to claim 1, wherein said supporting device (24) comprises a side panel (243) extending globally perpendicularly to the base (242), the side panel (243) being fixed to the upper spar (106b) or to the front wall (106d).

3. Propulsion assembly (100) according to claim 1 or 2, wherein each support ring (241) comprises a cutout (241a) allowing said extinguishing bottle (21) to be installed and removed from the support ring (241).

4. Propulsion assembly (100) according to any of claims 1 to 3, wherein each support ring (241) comprises locking means (25) for removably fixing one of said at least one extinguishing bottle (21) on said support ring (241), said locking means (25) being arranged to allow locking and unlocking of said extinguishing bottle (21) on said support ring (241).

5. Aircraft (100) having a propulsion assembly (100) according to one of the preceding claims.

## Patentansprüche

1. Antriebsanordnung (100) für ein Flugzeug (50), wobei die Antriebsanordnung (100) Folgendes aufweist:
- ein Strahltriebwerk (102), das ein Fan-Gehäuse (102a) und ein Zentralgehäuse (102b) umfasst, die sich beide um eine Längsachse (X) erstrecken,
- einen Befestigungspylon (104) mit einer starren Struktur (106), wobei die starre Struktur (106) die Form eines Kastens aufweist, der eine Vorderwand (106d) und einen oberen Holm (106b), der sich in Bezug auf die Vorderwand (106d) nach vorn erstreckt, aufweist, und
- ein Löschsystem (2),
wobei sich das Löschsystem (2) in einer vorderen Position relativ zur starren Struktur (106) befindet, wobei das Löschsystem (2) zwischen dem oberen Holm (106b), der Vorderwand (106d) und dem Fan-Gehäuse (102a) positioniert ist
und wobei das Löschsystem (2) Folgendes umfasst:
- mindestens eine Löschflasche (21), die ein Löschmittel enthält,
- mindestens eine Düse (22), die in einem kritischen Brandbereich der Antriebsanordnung (100) positioniert ist,
- Leitungen (23), wobei jede Leitung (23) ein mit der mindestens einen Löschflasche verbundenes erstes Ende (231) und ein mit der mindestens einen Düse (22) verbundenes zweites Ende (232) zum Zuführen des Löschmittels aufweist und
eine Stützvorrichtung (24), die mindestens einen Stützring (241) aufweist, an dem die mindestens eine Löschflasche (21) gehalten wird und lösbar fixiert ist, wobei jeder Stützring (241) an einer Basis (242) fixiert ist, wobei die Basis (242) am oberen Holm (106b) oder an der Vorderwand (106d) fixiert ist.

2. Antriebsanordnung (100) nach Anspruch 1, wobei die Stützvorrichtung (24) eine Seitenplatte (243) umfasst, die sich global senkrecht zur Basis (242) erstreckt, wobei die Seitenplatte (243) am oberen Holm (106b) oder an der Vorderwand (106d) fixiert ist.

3. Antriebsanordnung (100) nach Anspruch 1 oder 2, wobei jeder Stützring (241) einen Ausschnitt (241a) umfasst, der es ermöglicht, die Löschflasche (21) am Stützring (241) anzubringen und davon zu entfernen.

4. Antriebsanordnung (100) nach einem der Ansprüche 1 bis 3, wobei jeder Stützring (241) eine Verriegelungseinrichtung (25) zum lösbaren Fixieren einer der mindestens einen Löschflasche (21) am Stützring (241) umfasst, wobei die Verriegelungseinrichtung (25) dazu angeordnet ist, das Verriegeln und Entriegeln der Löschflasche (21) am Stützring (241) zu ermöglichen.

5. Flugzeug (100), das eine Antriebsanordnung (100) nach einem der vorhergehenden Ansprüche aufweist.

## Revendications

1. Ensemble de propulsion (100) pour un aéronef (50), ledit ensemble de propulsion (100) comportant :
- un turboréacteur (102) comprenant un carter de soufflante (102a) et un carter central (102b) s'étendant tous deux autour d'un axe longitudinal (X),
- un mât d'accrochage (104) ayant une structure rigide (106), ladite structure rigide (106) prenant la forme d'un caisson qui comporte une paroi avant (106d) et un longeron supérieur (106b) s'étendant vers l'avant par rapport à la paroi avant (106d), et
- un système d'extinction (2),
ledit système d'extinction (2) étant situé dans une position avant par rapport à ladite structure rigide (106), le système d'extinction (2) étant positionné entre ledit longeron supérieur (106b), ladite paroi avant (106d) et ledit carter de soufflante (102a) ;
et ledit système d'extinction (2) comprenant :
- au moins un extincteur (21) contenant un agent d'extinction,
- au moins une buse (22) positionnée dans une zone de feu critique dudit ensemble de propulsion (100),
- des tubulures (23), chaque tubulure (23) ayant une première extrémité (231) raccordée à l'au moins un extincteur et une seconde extrémité (232) raccordée à ladite au moins une buse (22) de délivrance de l'agent d'extinction ; et
un dispositif de support (24) comportant au moins une bague de support (241) sur laquelle est maintenue et fixée de manière amovible l'au moins un extincteur (21), chaque bague de support (241) étant fixée à une base (242), la base (242) étant fixée au longeron supérieur (106b) ou à la paroi avant (106d).

2. Ensemble de propulsion (100) selon la revendication 1, ledit dispositif de support (24) comprenant un panneau latéral (243) s'étendant globalement perpendiculairement à la base (242), le panneau latéral (243) étant fixé au longeron supérieur (106b) ou à la paroi avant (106d).

3. Ensemble de propulsion (100) selon la revendication 1 ou 2, chaque bague de support (241) comprenant une découpe (241a) permettant l'installation dudit extincteur (21) et son retrait de la bague de support (241).

4. Ensemble de propulsion (100) selon l'une quelconque des revendications 1 à 3, chaque bague de support (241) comprenant des moyens de verrouillage (25) pour fixer de manière amovible l'un desdits au moins un extincteur (21) sur ladite bague de support (241), lesdits moyens de verrouillage (25) étant agencés pour permettre le verrouillage et le déverrouillage dudit extincteur (21) sur ladite bague de support (241).

5. Aéronef (100), ayant un ensemble de propulsion (100) selon l'une des revendications précédentes.
